# EUROPÄISCHE PATENTSCHRIFT

(11) **EP 0 613 555 B1**
(45) Veröffentlichungstag und Bekanntmachung des Hinweises auf die Patenterteilung: **21.04.1999**
(21) Anmeldenummer: 93918975.9
(22) Anmeldetag: 11.09.1993
(51) Int. Cl.: G01N 27/407

(54) **PLANARE POLAROGRAPHISCHE SONDE ZUR BESTIMMUNG DES LAMBDA-WERTES VON GASGEMISCHEN**
PLANAR POLAROGRAPHIC PROBE FOR DETERMINING THE LAMBDA VALUE OF GAS MIXTURES
SONDE POLAROGRAPHIQUE DU TYPE PLANAIRE UTILISEE POUR DETERMINER LA VALEUR LAMBDA DE MELANGES GAZEUX

(30) Priorität: 24.09.1992 DE 4231966
(43) Veröffentlichungstag der Anmeldung: 07.09.1994
(73) Patentinhaber: ROBERT BOSCH GMBH, 70442 Stuttgart (DE)
(72) Erfinder: SCHNEIDER, Gerhard, D-71254 Ditzinger (DE); RENZ, Hans-Joerg, D-70771 Leinfelden-Echterdingen (DE); BAYHA, Kurt, D-71739 Oberriexingen (DE)
(86) Internationale Anmeldenummer: DE9300838
(87) Internationale Veröffentlichungsnummer: WO9407130

(56) Entgegenhaltungen:
- EP-A- 0 259 175
- WO-A-89/02073
- WO-A-89/02074
- WO-A-89/08840
- WO-A-90/04171
- WO-A-90/06506
- WO-A-90/10862
- US-A- 4 657 659

## Beschreibung

### Stand der Technik

Die Erfindung geht aus von einer planaren polarographischen Sonde nach der Gattung des Hauptanspruchs. Bekannte polarographische Sonden dienen zur Bestimmung des Lambda-Wertes von Gasgemischen, der das Verhältnis von Gesamtsauerstoff zur vollständigen Verbrennung des Kraftstoffs benötigten Sauerstoff des in einem Zylinder verbrennenden Kraftstoff-Luftgemischs bezeichnet, wobei die Sonden den Sauerstoffgehalt des Abgases über eine Grenzstromänderung ermitteln. Aufgrund einer kostengünstigen Herstellung hat sich in der Praxis in den letzten Jahren die Herstellung von in Keramikfolien- und Siebdrucktechnik herstellbaren planaren polarographischen Sonden durchgesetzt. In einfacher und rationeller Weise lassen sich diese planaren polarographischen Sonden, ausgehend von folienförmigen sauerstoffleitenden Festelektrolyten aus beispielsweise Zirkonoxid herstellen, die beidseitig mit je einer inneren und äußeren Pumpelektrode mit dazugehörigen Leiterbahnen beschichtet werden. Die innere Pumpelektrode befindet sich dabei in vorteilhafter Weise im Randbereich eines Diffusionskanals, durch den das Meßgas zugeführt wird, und der als Gasdiffusionswiderstand dient.

In der DE-OS 38 11 713 wird zur höheren Reproduzierbarkeit des Diffusionswiderstands vorgeschlagen, den Diffusionswiderstand durch einen in die ungesinterte Sonde eingefügten, porös sinternden Formkörper ohne Luftspalt zu bilden. Dazu wird aus einer Festelektrolytfolie eine Aussparung ausgestanzt, in die dann der poröse Formkörper eingesetzt wird. Zur Zuführung des Meßgases ist von außen ein Diffusionskanal quer durch die Sensorschichten zum porösen Formkörper geführt oder der porösen Formkörper ist an der Stirnfläche des Sensors freigelegt.

Aus der EP-A-01 94 082 ist eine planare polarographische Sonde bekannt, deren Diffusionswiderstand von einem parallel zum Festelektrolytkörper verlaufenden Spalt und einer am Spalt gegenüberliegenden und die Elektrode abdeckenden porösen Isolationsschicht gebildet wird. Das Meßgas wird der Elektrode über den Spalt und die poröse Isolationsschicht zugeleitet.

Die Herstellungsweise bei den bekannten planaren polarographischen Sonden ist aufwendig. So ist beispielsweise zur Einbringung des Diffusionslochs ein Stanzvorgang notwendig, dessen Positioniergenauigkeit für die Sensorfunktion von besonderer Bedeutung ist. Die Ausbildung der Diffusionszone mit einem Luftspalt erfordert andererseits zusätzliche Siebdruckschritte. Jeder zusätzliche Siebdruckschritt bedeutet einen zusätzlichen Trocknungsschritt und somit die Möglichkeit erhöhter Substratlängenänderungen. Dies wirkt sich wiederum negativ auf die Positioniergenauigkeit der nachfolgenden Siebdruckschritte aus, was insbesondere beim Erweitern der Sonde mit Nernst-Zellen die Reproduzierbarkeit beeinträchtigt.

Aus der WO-Schrift 90/10862 ist eine planare polarographische Sonde bekannt, bei der eine innere Pumpelektrode über eine Diffusionsbarriere mit dem Meßgas in Verbindung steht. Die Diffusionsbarriere ist dabei als ein mit einem porösen Material gefüllter Diffusionskanal ausgebildet. Der Diffusionskanal ist dabei an der vorderen Stirnfläche der Sonde offen und an den anderen Seitenflächen geschlossen.

Ferner ist aus der WO-Schrift 90/06506 bekannt, einer Elektrode in Diffusionsrichtung eine Diffusionsschicht vorzuschalten und die Diffusionsschicht einschließlich der Elektrode mit einer gasdichten Schicht zu umschließen. Die Öffnung der Diffusionsschicht zum Meßgas hin wird durch nachträgliches Entfernen der Abdeckschicht an der vorderen Stirnseite der Diffusionsschicht realisiert. Eine zusätzliche Öffnung an den Seitenflächen ist nicht vorgesehen.

Die WO-Schrift 89/08840 offenbart eine planare polarographische Sonde, bei der der inneren Pumpelektrode das Meßgas ebenfalls über einen Diffusionskanal zugeführt wird, wobei der Diffusionskanal lediglich an der vorderen Stirnseite eine Öffnung für das Meßgas aufweist.

Aus der WO-Schrift 90/04171 ist eine planare Sonde bekannt, bei der der Festelektrolyt in Drucktechnik auf ein Substrat aufgebracht ist und der inneren Pumpelektrode das Meßgas über einen aus porösern Material hergestellten Diffusionsspalt zugeführt wird. Der Diffusionsspalt ist ebenfalls nur an der vorderen Stirnseite zum Meßgas hin geöffnet.

### Vorteile der Erfindung

Die polarographische Sonde mit den kennzeichnenden Merkmalen des Anspruchs 1 hat den Vorteil, daß sie einen fertigungsgerechten Aufbau besitzt, durch den es möglich ist, die Siebdruckschritte beim Herstellen der Sonde zu reduzieren. Da der Aufbau der Sonde ohne Diffusionsloch bzw. Diffusionsspalt auskommt, ist die Sonde unempfindlich gegen Rißbildung und Delamination nach dem Sintern. Gleichzeitig wird eine höhere mechanische Stabilität der Sonde, insbesondere im Bereich der Diffusionszone erreicht. Damit ist eine bessere Reproduzierbarkeit des Diffusionswiderstandes und der Sensorfunktion möglich.

Durch die in den Unteransprüchen aufgeführten Maßnahmen sind vorteilhafte Weiterbildungen der im Hauptanspruch angegebenen polarographischen Sonde möglich. Besonders vorteilhaft ist, daß die Diffusionsschicht ganzflächig über den Mehrfachnutzen gedruckt wird. Dadurch ist die einzelne Sonde besonders kostengünstig herstellbar. Vorteilhaft ist ferner, daß sich der Diffusionswiderstand durch den entsprechend freiliegenden Bereich der Diffusionsschicht an den Stirnflächen der Sonde einstellen läßt.

### Zeichnung

Ein Ausführungsbeispiel der Erfindung ist in der Zeichnung dargestellt und in der nachfolgenden Beschreibung näher erläutert.

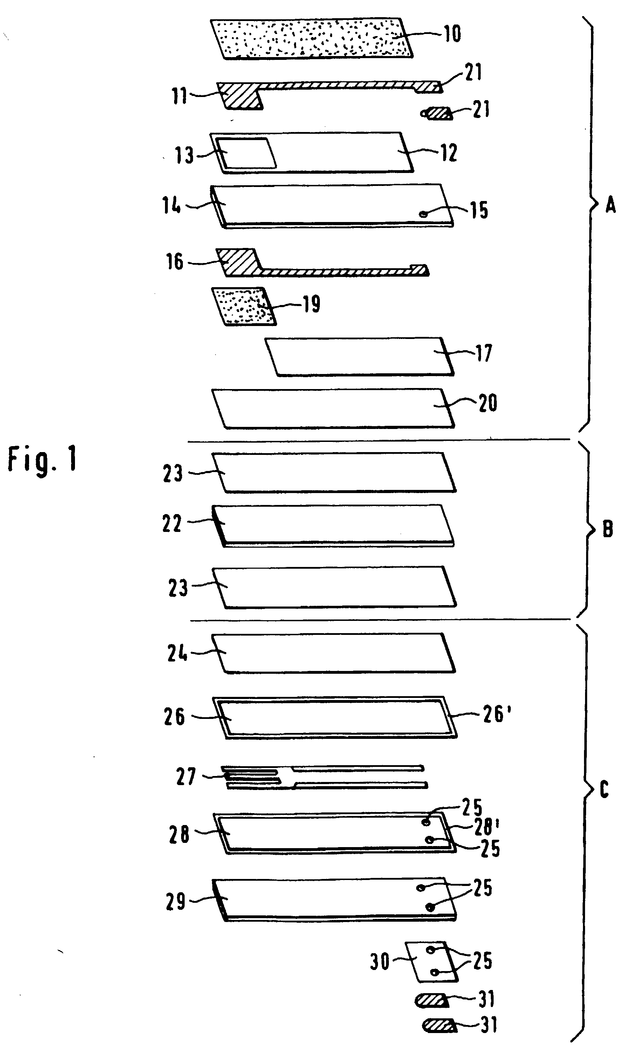

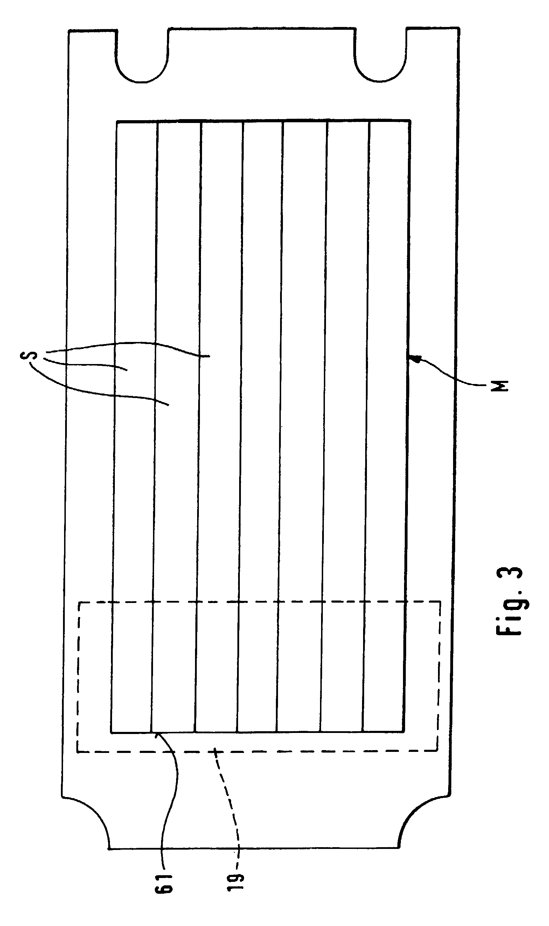

Es zeigen Figur 1 das Layout einer Sonde nach der Erfindung, Figur 3 einen Längsschnitt durch die Diffusionszone der Sonden gemäß Figur 1 und Figur 3 eine Draufsicht auf einen Mehrfachnutzen zur Herstellung der Sonde gemäß der Erfindung.

### Ausführungsbeispiel

Gemäß Figur 1 besteht die Sonde aus einer Pumpzelle A, einer Zwischenfolie B und einer Heizereinheit C. Die Pumpzelle A ist aufgebaut aus einer ersten Festelektrolytfolie 14 mit ausgestanztem Durchkontaktierloch 15, der Isolation 12 mit einem ausgesparten Fenster 13, über das sich eine äußere Pumpelektrode 11 erstreckt. Der äußeren Pumpelektrode 11 ist auf der anderen Seite der Festelektrolytfolie 14 gegenüberliegend eine inneren Pumpelektrode 16 angeordnet, über die eine poröse Diffusionsschicht 19 gelegt ist. Eine Ausgleichsschicht 17 überdeckt die nicht von der Diffusionsschicht 19 bedeckte Fläche der Festelektrolytfolie 14.

Die äußere Pumpelektrode 11 ist über die gesamte Fläche mit einer Schutzschicht 10 abgedeckt. Die beiden Elektroden 11, 16 sind über Leiterbahnen an Anschlüsse 21 geführt. Die Schutzschicht 10 besteht beispielsweise aus porösem Zirkonoxid.

Die Zwischenfolie B dient zur Stabilisierung der Sonde und besteht aus einer zweiten Festelektrolytfolie 22, die an beiden Seiten jeweils mit einer interlaminaren Binderschicht 23 versehen ist.

Die Heizereinheit C besteht aus einer dritten Festelektrolytfolie 29 mit ausgestanzten Kontaktierlöchern 25, einer ersten Heizerisolation 26 und einer zweiten Heizerisolation 28 mit jeweils einem gasundurchlässigen Rahmen 26' bzw. 28' sowie den Heizeranschlüssen 31. Zwischen Festelektrolytfolie 29 und den Heizeranschlüssen 31 ist eine weitere Isolierung 30 vorgesehen, die ebenfalls über Durchkontaktierlöcher 25 verfügt. Die Heizereinheit C ist zur Stabilisierungseinheit B hin ferner mit einer interlaminaren Binderschicht 24 versehen.

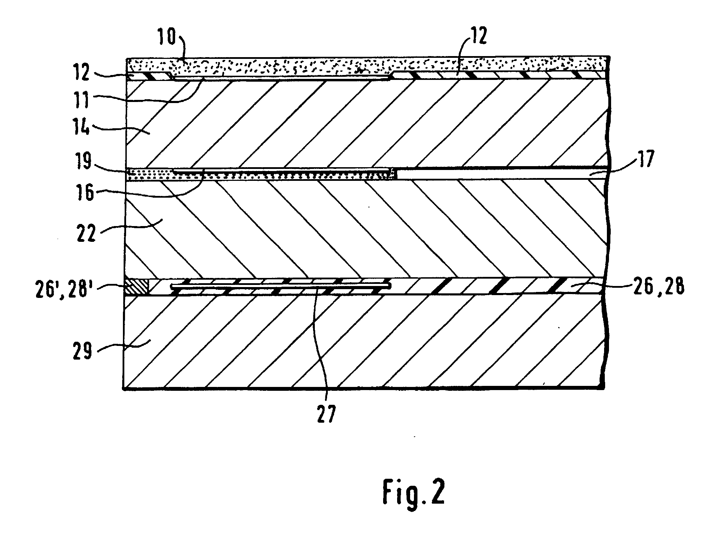

Durch zusammenlaminieren der Pumpzelle A, der Zwischenfolie B und der Heizereinheit C mittels der interlaminaren Binderschichten 20, 23, 24 entsteht nach der Sinterung die Sonde, wie sie in einem Ausschnitt im Bereich der Diffusionsschicht 19 im Längsschnitt in Figur 2 dargestellt ist.

Die Herstellung der erfindungsgemäßen polarographischen Sonde soll am Beispiel der in Figur 1 und 2 schematisch dargestellten Sonde sowie der in Figur 3 gezeigten Prinzipdarstellung eines Mehrfachnutzens M erläutert werden. Der Mehrfachnutzen M enthält mehrere parallel nebeneinander angeordnete Nutzen S, die später die polarographischen Sonden bilden.

Zur Herstellung der Pumpzelle A wird als Festelektrolytfolie 14 eine etwa 0,3 bis 0,6 mm Dicke mit Y₂O₃ stabilisierte ZrO₂-Folie im ungesinterten Zustand verwendet. Die ZrO₂-Folie ist so dimensioniert, daß eine entsprechende Anzahl von Sonden nebeneinander plaziert werden können, so daß ein Mehrfachnutzen mit beispielsweise 7 Nutzens gemäß Figur 3 entsteht.

Auf die Festelektrolytfolie 14 werden im Siebdruckverfahren die Isolation 12, die äußere und die innere Pumpelektrode 11 und 16 nebst den dazugehörigen Leiterbahnen und den Anschlüssen 21 unter Verwendung einer üblichen Pt-Cermet-Paste sowie die Schutzschicht 10 aufgedruckt. Zum Zwecke der Durchkontaktierung wird das Durchkontaktierloch 15 ebenfalls mit der elektrisch leitenden Pt-Cermet-Schicht gefüllt.

Über die Breite des Mehrfachnutzens M wird die Diffusionschicht 19 aufgedruckt. Wichtig ist dabei, daß die Diffusionsschicht 19 an der vorderen Kante 61 der Nutzen S über diese hinausragt. Als Diffusionsschicht 19 wird beispielsweise poröses Zirkonoxid verwendet, wobei die Porosität der Diffusionsschicht 19 durch Zusatz von Porenbildnern erzeugt wird, die beim Sinterprozeß verbrennen, sich zersetzen oder verdampfen. Typische Porenbildner sind beispielsweise Thermalrußpulver, Kunststoffe, z.B. auf Polyurethan-Basis, Salze, z.B. Ammoniumcarbonat und organische Substanzen, wie z.B. Theobromin und Indanthrenblau. Derartige Porenbildner werden der aus Zirkonoxid bestehenden Druckpaste in einer solchen Menge zugesetzt, daß eine Diffusionsschicht mit einer Porosität von 10 bis 50 % entsteht. Der mittlere Porendurchmesser liegt vorzugsweise bei 5 - 50 Mikrometer.

Anschließend wird der nicht mit der Diffusionsschicht 19 versehene Bereich eines einzelnen Nutzens S mit der Ausgleichsschicht 17 bedruckt. Abschließend wird der Mehrfachnutzen mit dem interlaminaren Binder 20 beschichtet.

In einem zweiten Schritt wird die Zwischenfolie B und in einem dritten Schritt die Heizereinheit C hergestellt. Die Herstellung der Zwischenfolie B und der Heizereinheit C erfolgt in an sich bekannter Weise ebenfalls im Siebdruckverfahren.

Als Festelektrolytfolien eignen sich die bekannten O₂-Ionen leitenden Festelektrolytfolien auf der Basis von Oxiden vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden.

Die Pumpelektroden und die dazugehörigen Leiterbahnen und Anschlüsse bestehen in an sich bekannter Weise aus Pasten auf Basis von Edelmetallen, insbesondere Platin, oder Edelmetall-Cermet. Aus gleichem Material besteht der Heizer 27.

Nach dem Herstellen der Mehrfachnutzen der Pumpzelle A, der Zwischenfolie E und der Heizereinheit C werden die drei einzelnen Mehrfachnutzen mittels der interlaminaren Binderschichten 20, 23 und 24 zusammenlaminiert. Danach werden die einzelnen Sonden aus dem Mehrfachnutzen ausgeschnitten. Durch die über den gesamten Mehrfachnutzen sich erstreckende Diffusionsschicht 19 wird beim Vereinzeln in Nutzen S die Diffusionsschicht 19 an der vorderen und den beiden seitlichen Stirnflächen freigelegt. Diese drei Stirnflächen bilden die Diffusionsbarriere für das Meßgas.

Nach dem Vereinzeln des Mehrfachnutzens werden die Nutzen S bei einer Temperatur von ca. 1400°C gesintert. Die so erhaltenen Sonden können in an sich bekannte Gehäuse montiert und zur Bestimmung des Lambda-Wertes von Gasgemischen verwendet werden.

## Patentansprüche

1. Planare polarographische Sonde zur Bestimmung des Lambda-Wertes von Gasgemischen, insbesondere von Abgasen von Verbrennungsmotoren, mit auf einem Keramikträger angeordneter äußerer und innerer Pumpelektrode (11, 16) und mit einer als Diffusionsschicht (19) ausgebildeten Diffusionsbarriere, die zumindest teilweise die innere Pumpelektrode (16) bedeckt und über die das Meßgas der inneren Pumpelektrode (16) zuführbar ist, wobei der Keramikträger in Diffusionsrichtung des Meßgases eine Großfläche bildet und zumindest eine vordere und zwei seitliche Stirnflächen aufweist, dadurch gekennzeichnet, daß sich die Diffusionsschicht (19) im Bereich der inneren Pumpelektrode (16) über die gesamte Breite der Großfläche des Keramikträgers erstreckt, derart, daß die Diffusionsschicht (19) an der vorderen und an den beiden seitlichen Stirnflächen des Keramikträgers dem Meßgas gegenüber freiliegt.

2. Sonde nach Anspruch 1, dadurch gekennzeichnet, daß der diffusionsschichtfreie Bereich der Großfläche des Keramikträgers mit einer Ausgleichsschicht (17) versehen ist.

3. Verfahren zur Herstellung einer planaren polarographischen Sonde zur Bestimmung des Lambda-Wertes von Gasgemischen, insbesondere von Abgasen von Verbrennungsmotoren mit auf einem Keramikträger aufgebrachter äußerer und innerer Pumpelektrode (11, 16) und mit einer Diffusionsschicht (19), die zumindest teilweise die innere Pumpelektrode (16) bedeckt, wobei ein Mehrfachnutzen (M) mit einer Mehrzahl von entlang einer vorderen Kante parallel nebeneinander angeordneten Nutzen (S) vorgesehen ist, dadurch gekennzeichnet, daß die Diffusionsschicht (19) auf den Mehrfachnutzen (M) für die nebeneinander angeordneten Nutzen (S) gleichzeitig aufgebracht wird, derart, daß die Diffusionsschicht (19) an der vorderen Kante die einzelnen Nutzen (S) und an den beiden Seitenkanten den Mehrfachnutzen (M) ganzflächig überragt.

4. Verfahren nach Anspruch 3, dadurch gekennzeichnet, daß der diffusionsschichtfreie Bereich des Mehrfachnutzens (M) mit einer Ausgleichsschicht (17) versehen wird, welche etwa die Dicke der Diffusionsschicht (19) besitzt.

## Claims

1. Planar polarographic probe for determining the lambda value of gas mixtures, in particular of exhaust gases from combustion engines, having outer and inner pump electrodes (11, 16) arranged on a ceramic support, and having a diffusion barrier which is designed in the form of a diffusion layer (19) and at least partly covers the inner pump electrode (16), and via which the gas to be measured can be fed to the inner pump electrode (16), the ceramic support forming a large face in the diffusion direction of the gas to be measured and having at least one front and two lateral end faces, characterized in that the diffusion layer (19) extends in the region of the inner pump electrode (16) over the entire width of the large face of the ceramic support in such a way that the diffusion layer (19) is exposed to the gas to be measured on the front and on the two side end faces of the ceramic support.

2. Probe according to Claim 1, characterized in that the region of the large face of the ceramic support free of the diffusion layer is provided with a compensating layer (17).

3. Process for producing a planar polarographic probe for determining the lambda value of gas mixtures, in particular of exhaust gases from combustion engines, having outer and inner pump electrodes (11, 16) arranged on a ceramic support, and having a diffusion layer (19) which at least partly covers the inner pump electrode (16), a multiple groove (M) having a multiplicity of grooves (S) arranged parallel next to one another along a front edge being provided, characterized in that the diffusion layer (19) is applied to the multiple groove (M) simultaneously, for the grooves (S) arranged next to one another, in such a way that the diffusion layer (19) projects surface-wide on the front edge of the individual grooves (S) and on the two side edges of the multiple groove (M).

4. Process according to Claim 3, characterized in that the region of the multiple groove (M) free of the diffusion layer is provided with a compensating layer (17) which has a thickness approximately equal to that of the diffusion layer (19).

## Revendications

1. Sonde polarographique planaire pour déterminer le coefficient lambda de mélanges gazeux, notamment de gaz d'échappement de moteurs à combustion interne, comprenant une électrode de pompage extérieure (11) et une électrode de pompage intérieure (16) sur un support en céramique, ainsi qu'une barrière de diffusion constituée par une couche de diffusion (19), cette barrière recouvrant au moins en partie l'électrode de pompage intérieure (16) et servant à fournir le gaz à mesurer à l'électrode de pompage intérieure (16),
le support en céramique formant, dans la direction de diffusion du gaz à mesurer, une grande face et au moins une face frontale et deux faces latérales,
caractérisée en ce que
la couche de diffusion (19) s'étend au niveau de l'électrode de pompage intérieure (16) sur toute la largeur de la grande surface du support en céramique, pour dégager la couche de diffusion (19) sur sa face frontale et sur ses deux tranches latérales du support en céramique, pour être exposée aux gaz à mesurer.

2. Sonde selon la revendication 1,
caractérisée en ce que
la zone de la grande surface dégagée de la couche de diffusion sur le support en céramique, comporte une couche de compensation (17).

3. Procédé de fabrication d'une sonde polarographique planaire pour déterminer le coefficient lambda d'un mélange gazeux et notamment des gaz d'échappement émis par les moteurs à combustion interne, comprenant une électrode de pompage extérieure (11) et une électrode de pompage intérieure (16) sur un support en céramique, ainsi qu'une couche de diffusion (19) qui recouvre au moins en partie l'électrode de pompage intérieure (16),
selon lequel on réalise un élément multiple (M) avec plusieurs éléments (S) juxtaposés parallèlement le long d'une arête avant,
caractérisé en ce que
la couche de diffusion (19) est appliquée sur l'élément multiple (M), simultanément pour les éléments (S) juxtaposés de façon que la couche de diffusion (19) dépasse du bord avant des différents éléments (S) et de toute la surface des deux bords latéraux de l'élément multiple (M).

4. Procédé selon la revendication 3,
caractérisé en ce qu'
on munit la zone sans couche de diffusion de l'élément multiple (M), d'une couche de compensation (17) ayant sensiblement l'épaisseur de la couche de diffusion (19).
